# EUROPÄISCHE PATENTANMELDUNG

(11) **EP 1 832 209 A1**
(43) Veröffentlichungstag der Anmeldung: **12.09.2007**
(21) Anmeldenummer: 06116282.2
(22) Anmeldetag: 29.06.2006
(51) Int. Cl.: A47J 27/212, A47J 37/08

(54) **Haushaltsgerät mit Leuchtanzeige**

(30) Priorität: 10.03.2006 DE 102006011268
(71) Anmelder: Efbe Elektrogeräte GmbH, 07422 Bad Blankenburg (DE)
(72) Erfinder: Heinze, Bernd, 07426, Königsee (DE)
(74) Vertreter: Reitstötter - Kinzebach

(57) **Zusammenfassung**

Die Erfindung betrifft ein elektrisches Haushaltsgerät, wie beispielsweise einen Toaster (10) oder einen Wasserkocher, wobei das Haushaltsgerät Energieversorgungsmittel und wenigstens eine elektrisch betriebene Leuchtanzeigeeinrichtung aufweist. Das erfindungsgemäße Haushaltsgerät ist dadurch gekennzeichnet, dass die Leuchtanzeigeeinrichtung als flexibles Elektrolumineszenzband (29) ausgebildet ist, das beispielsweise in einer in der Außenfläche des Gehäuses ausgesparten Nut um den gesamten Außenumfang des Gehäuses herumgeführt werden kann und daher von allen Seiten gut sichtbar ist.

## Beschreibung

Die vorliegende Erfindung betrifft ein elektrisches Haushaltsgerät mit wenigstens einer Leuchtanzeige.

Leuchtanzeigen werden bei elektrischen Haushaltsgeräten in unterschiedlichsten Varianten eingesetzt. Am weitesten verbreitet sind Leuchtanzeigen, welche den Betrieb des Haushaltsgeräts optisch signalisieren. Dazu wird die Leuchtanzeige beispielsweise über den Hauptschalter des Haushaltsgeräts gesteuert und signalisiert über die Zustände AN/AUS, ob das Haushaltsgerät in Betrieb ist oder nicht. Andere Leuchtanzeigeeinrichtungen von Haushaltsgeräten signalisieren unterschiedliche Betriebszustände, wie beispielsweise unterschiedliche Leistungsstufen eines Toasters oder eventuell noch vorhandene Restwärme einer Herdplatte. Als Leuchtanzeigeeinrichtung werden bei Haushaltsgeräten üblicherweise Glühlampen oder lichtemittierende Dioden (LEDs) verwendet, wobei letztere wegen ihres geringen Stromverbrauchs und der kompakten Abmessungen besonders bevorzugt sind.

Bekannte Leuchtanzeigen von Haushaltsgeräten sind jedoch mit Nachteilen behaftet. So stellen Glühlampen oder LEDs im Wesentlichen punktförmige Lichtquellen dar, so dass die Leuchtanzeige nur unter einem eingeschränkten Betrachtungswinkel wahrgenommen werden kann. Insbesondere ist die Leuchtanzeige üblicherweise nicht sichtbar, wenn man das Haushaltsgerät von einer dem Einbauort der Leuchtanzeigeeinrichtung abgewandten Seite des Gerätes her betrachtet. Um dieses Problem zu vermeiden, müssen bei herkömmlichen Haushaltsgeräten zahlreiche Leuchteinrichtungen verwendet und am Außenumfang des Haushaltsgeräts verteilt angeordnet werden. Diese Lösung erhöht jedoch die Zahl der zu montierenden Bauteile, was letztlich auch zu einer Erhöhung der Montagekosten und damit zu erhöhten Gesamtherstellungskosten führt. Auch die Gehäuseformen müssen entsprechend aufwändig gestaltet werden, da für jede einzelne Leuchteinrichtung eine entsprechende Ausnehmung, in welche das Leuchtmittel dann eingesetzt wird, und eine Bohrung für die Kontakte zur Energieversorgung und zu einer gegebenenfalls erforderlichen Steuerschaltung vorgesehen werden müssen. Auch unter ästhetischen Gesichtspunkten bieten Glühlampen und LEDs nur eingeschränkte designerische Möglichkeiten. Will man beispielsweise das Gehäuse eines Haushaltsgeräts gleichmäßig beleuchten, so können einzelne Leuchtelemente wie LEDs nicht direkt in die Oberfläche des Haushaltsgeräts eingelassen werden, da mit den punktförmigen Lichtquellen ein gleichmäßigen Beleuchtungseindruck nicht erzielt werden kann. Konstrukteure behelfen sich in diesen Fällen meist damit, das Haushaltsgerät mit einem mehrschaligen Aufbau zu versehen, wobei man die LEDs im Inneren des Gehäuses hinter einer als Streuwand dienenden Wand mit unregelmäßiger Oberflächenstruktur anordnet. Das an dieser Wand gestreute Licht sorgt dann zumindest für eine einigermaßen gleichmäßige Ausleuchtung einer transparenten oder semitransparenten äußeren Gehäuseschale. Eine derart aufwändige Konstruktion ist jedoch ebenfalls mit hohen Herstellungskosten verbunden. Zudem eignen sich derartige Lösungen nur für mehr oder weniger rotationssymmetrische Körper. Bei Haushaltsgeräten mit unregelmäßig geformten Außenkonturen lassen sich auch auf diese Weise keine befriedigenden Ergebnis erzielen.

Der vorliegenden Erfindung liegt daher das technische Problem zu Grunde, ein elektrisches Haushaltsgerät mit einer elektrisch betriebenen Leuchtanzeigeeinrichtung bereitzustellen, welches die oben beschriebenen Nachteile vermeidet. Insbesondere soll die Leuchtanzeigeeinrichtung des erfindungsgemäßen Haushaltsgeräts auf einfache und kostengünstige Weise ermöglichen, dass die Leuchtanzeigeeinrichtung ohne großen Montageaufwand in das Haushaltsgerät integriert werden kann, wobei dem Konstrukteur größtmögliche Freiheiten, bei der Anordnung und Dimensionierung der Leuchtanzeigeeinrichtung gelassen werden soll.

Gelöst wird dieses technische Problem durch das elektrische Haushaltsgerät mit den Merkmalen des vorliegenden Patentanspruchs 1. Vorteilhafte Weiterbildungen des erfindungsgemäßen Haushaltsgeräts sind Gegenstand der abhängigen Ansprüche.

Die Erfindung betrifft demnach ein elektrisches Haushaltsgerät mit Energieversorgungsmitteln und wenigstens einer elektrisch betriebenen Leuchtanzeigeeinrichtung, das dadurch gekennzeichnet ist, dass die Leuchtanzeigeeinrichtung als Elektrolumineszenzband ausgebildet ist. Unter einem "Elektrolumineszenzband" soll im vorliegenden Zusammenhang ein Leuchtmittel verstanden werden, das elektrisch zu Lumineszenz angeregt werden kann, und dessen Abmessungen in zumindest einer Richtung größer als die Querschnittsfläche in dieser Richtung ist. Während das Elektrolumineszenzband des erfindungsgemäßen elektrischen Haushaltsgeräts gemäß dieser Definition auch eine im Wesentlichen zweidimensionale, folienartige Struktur aufweisen kann, sind im Wesentlichen eindimensionale Strukturen, wie Elektrolumineszenzkabel oderschnüre besonders bevorzugt. Das Elektrolumineszenzband kann einen beliebigen Querschnitt, beispielsweise rechteckig oder oval, aufweisen, wobei ein kreisförmiger Querschnitt wegen der gleichmäßigen radialen Lichtemission besonders bevorzugt ist. Im Fall eines Elektrolumineszenzbandes mit kreisförmigem Querschnitt liegt der typische Querschnittsdurchmesser des Bandes im Bereich von 1 mm bis 10 mm, besonders bevorzugt im Bereich von 2 mm bis 5 mm. Die Länge des Elektrolumineszenzbandes liegt vorzugsweise im Bereich von 1 mm bis einigen Dezimetern und kann vom Konstrukteur je nach Einsatzzweck in weiten Bereichen variiert werden. Das Elektrolumineszenzband gewährleistet eine gleichmäßige Lichtabstrahlung auf seiner gesamten Länge, so dass bereits ein Elektrolumineszenzband ausreicht, eine Leuchtwirkung zu erzielen, für die bei herkömmlichen Haushaltsgeräten mehrere LEDs oder Glühlampen eingesetzt werden müssen. Aufgrund seiner geringen Querabmessungen kann das Elektrolumineszenzband leicht in ein Vielzahl unterschiedlichster Haushaltsgeräte integriert werden.

Gemäß einer besonders bevorzugten Ausführungsform des erfindungsgemäßen Haushaltsgeräts ist das Elektrolumineszenzband als flexibles Band ausgebildet, so dass es leicht an beliebig geformte Haushaltsgeräte angepasst werden kann. So erhält der Konstrukteur zusätzliche gestalterische Freiheit bei der Anordnung der Leuchtmittel.

Flexible Elektrolumineszenzbänder, wie sie in dem erfindungsgemäßen Haushaltsgerät eingesetzt werden können, sind als sogenannte Leuchtbänder oder Leuchtkabel in unterschiedlichsten Ausführungsformen kommerziell erhältlich. Es sind beispielsweise Elektrolumineszenzbänder aus Halbleitermaterialien, insbesondere aus organischen Halbleitermaterialien auf der Basis von konjugierten Polymeren bekannt. Eine besonders kostengünstige Variante derartiger Elektrolumineszenzbändern nutzt die Lumineszenz, die durch direkte Anregung fluoreszierender Leuchtpigmente in einem elektrischen Feld entsteht. Dabei besteht das Elektrolumineszenzband typischerweise aus einer Innenelektrode, beispielsweise einem Kupferdraht, die mit einer die Leuchtpigmente enthaltenden Lumineszenzschicht bedeckt ist, um welche wiederum ein oder mehrere als Außenelektrode dienenden Drähte spiralförmig gewickelt sind. Die Lumineszenzschicht bildet daher gewissermaßen das Dielektrikum eines rotationssymmetrischen, zylinderförmigen Kondensators, so dass eine besonders gleichmäßige Lichtabstrahlung gewährleistet ist. Diese zylinderförmige Kondensatoranordnung ist üblicherweise von einer durchsichtigen oder durchscheinenden, klaren oder eingefärbten Kunststoffhülle umgeben, welche die elektrischen Komponenten schützt und, um Fall einer Einfärbung, die gewünschte Farbe des abgestrahlten Lichtes mit beeinflusst. Selbstverständlich kann die Lichtfarbe außerdem durch Wahl der entsprechenden Leuchtpigmente im Dielektrikum variiert werden. Ein derartig aufgebautes Elektrolumineszenzband ist mechanisch hoch belastbar und so flexibel, dass es sich mit geringen Krümmungsradien auch an Ecken und Kanten eines Haushaltsgerätegehäuses anpassen lässt. Üblicherweise werden derartige Elektrolumineszenzkabel mit einer Wechselspannung zwischen einem Volt (effektiv) und einigen hundert Volt (effektiv) bei einer Frequenz zwischen wenigen Hundert Herz bis zu einigen Kiloherz betrieben. Die Stromaufnahme liegt unter diesen Bedingungen bei einigen Milliampère. Derartige Elektrolumineszenzbänder werden beispielsweise unter der Marke LYTEC^{®} von der israelischen Firma Elam - EL Industries Ltd. vertrieben.

Durch Verwendung eines flexiblen Elektrolumineszenzbandes lässt sich das Elektrolumineszenzband besonders vorteilhaft an die Außenkontur des Haushaltsgerätes anpassen.

Gemäß einer besonders vorteilhaften Variante weist das erfindungsgemäße Haushaltsgerät eine in der Außenfläche des Haushaltsgeräts ausgesparte Nut auf, in welche das Elektrolumineszenzband eingelegt werden kann. Die entsprechende Nut kann beim Ausformen der meist aus Kunststoff bestehenden Gehäuse der Haushaltsgeräte herstellungstechnisch einfach realisiert werden.

Als zusätzlicher Schutz des Elektrolumineszenzbandes kann die Nut nach Einlegen des Bandes mit einer transparenten oder semitransparenten Blende bedeckt werden, die vorzugsweise bündig mit der Außenfläche des Haushaltsgerätes abschließt. Auch derartige Blenden können produktionstechnisch einfach als separate Formkörper hergestellt werden.

Gemäß einer vorteilhaften Variante umgibt das Elektrolumineszenzband den Außenumfang des Haushaltsgeräts im Wesentlichen vollständig, so dass das von dem Elektrolumineszenzband ausgesandte optische Signal von allen Seiten des Haushaltsgeräts aus sichtbar ist.

Das Elektrolumineszenzband des erfindungsgemäßen Haushaltsgerätes kann beispielsweise als Betriebsanzeige ausgebildet sein und durch Leuchten signalisieren, dass das Gerät in Betrieb ist. Das Elektrolumineszenzband kann beispielsweise auch mit einem pulsierenden Licht eine Bereitschaftsanzeige und einem Dauerlicht den aktiven Betrieb des Haushaltsgerätes anzeigen. Je nach Ausführungsform und elektrischer Beschaltung kann die Helligkeit des Elektrolumineszenzbandes stufenlos zwischen Null und einem Maximalwert variiert werden. Daher lassen sich mit einem Elektrolumineszenzband unterschiedliche Betriebzustände des Haushaltsgeräts auch durch unterschiedliche Helligkeiten anzeigen.

Allgemein weist das elektrische Haushaltsgerät vorzugsweise einen Konverter auf, der abhängig von den zu Verfügung stehenden Energieversorgungsmitteln, beispielsweise einem Netzanschluss oder Batterien, eine den Spezifikationen des Elektrolumineszenzbandes entsprechende Wechselspannung erzeugt. Das Elektrolumineszenzband wird üblicherweise durch die Energieversorgungsmittel des Haushaltsgeräts mit Strom versorgt. Wenn die Energieversorgungsmittel eine wiederaufladbare oder nicht wiederaufladbare Batterie umfassen, ist üblicherweise ein Inverter vorgesehen, welcher aus der Gleichspannung die erforderliche Wechselspannung erzeugt.

Je nach Ausführungsform können bei einem Haushaltsgerät ein oder mehrere Elektrolumineszenzbänder vorgesehen sein. Bei der Verwendung von mehreren Elektrolumineszenzbändern können die Bänder in unterschiedlichen Farben ausgebildet sein und so beispielsweise unterschiedliche Betriebszustände des elektrischen Haushaltsgerätes durch Aktivierung unterschiedlich farbiger Elektrolumineszenzbänder anzeigen. Bei Haushaltsgeräten, die mit einem Timer betrieben werden, kann beispielsweise abhängig von der verbleibender Betriebszeit ein bestimmtes farbiges Elektrolumineszenzband aktiviert werden, so dass man auf Grund der Farbwechsel schon von weitem erkennen kann, wann sich die Restlaufzeit dem Ende zuneigt. Auch andere Betriebparameter lassen sich so optisch wiedergeben: Wenn es sich bei dem elektrischen Haushaltsgerät beispielsweise um einen Toaster handelt, kann durch unterschiedlich farbige Elektrolumineszenzbänder beispielsweise der eingestellte Bräunungsgrad angezeigt werden. Handelt es sich bei dem elektrischen Haushaltsgerät beispielsweise um einen Wasserkocher, kann die eingestellte Endtemperatur oder die momentane Wassertemperatur durch unterschiedlich farbige Elektrolumineszenzbänder angezeigt werden.

Besonders vorteilhaft ist das erfindungsgemäße elektrische Haushaltsgerät ein transportables Kleingerät, wie beispielsweise ein Toaster, ein Wasserkocher, ein Eierkocher, ein Kaffeeautomat usw. Bei dem erfindungsgemäßen Haushaltsgerät kann es sich jedoch auch um ein stationäres Haushaltsgerät handeln, beispielsweise einen Induktionsherd, bei dem die Elektrolumineszenzbänder in die Herdplatte eingelassen sind und beispielsweise im Betrieb befindliche Kochfelder anzeigen. Je nach Helligkeit, Farbe oder Leuchtmodus (Dauerleuchten oder pulsierendes Leuchten) kann dann die eingestellte Intensität des jeweiligen Kochfeldes oder momentane Heizphasen oder, im Fall eines ausgeschalteten Kochfeldes, gegebenenfalls noch vorhandene Restwärme angezeigt werden. Neben des bislang beschriebenen Küchengeräten kann das erfindungsgemäße Elektrolumineszenzband selbstverständlich auch bei anderen Haushaltsgeräten, wie beispielsweise Waschmaschinen, Stereoanlagen oder Fernsehgeräten verwendet werden.

Die Erfindung wird im Folgenden unter Bezugnahme auf in den beigefügten Zeichnungen dargestellte Ausführungsbeispiele näher erläutert. In den Zeichnungen zeigt:
- Fig. 1: ein als Toaster ausgebildetes erfindungsgemäßes elektrisches Haushaltsgerät mit Elektrolumineszenzband;
- Fig. 2: einen schematischen Schaltplan zur Ansteuerung des Elektrolumineszenzbandes des Toasters der Fig. 1;
- Fig. 3: ein als Wasserkocher ausgebildetes erfindungsgemäßes elektrisches Haushaltsgerät;
- Fig. 4: einen Detailausschnitt des Gehäuses des Wasserkochers der Fig. 3;
- Fig. 5: eine schematische Darstellung eines transparenten Rings zur Abdeckung eines in das Gehäuse des Wasserkochers der Figuren 4 und 5 eingesetzten Elektrolumineszenzbandes; und
- Fig. 6: eine schematische Schnittansicht eines Elektrolumineszenzbandes.

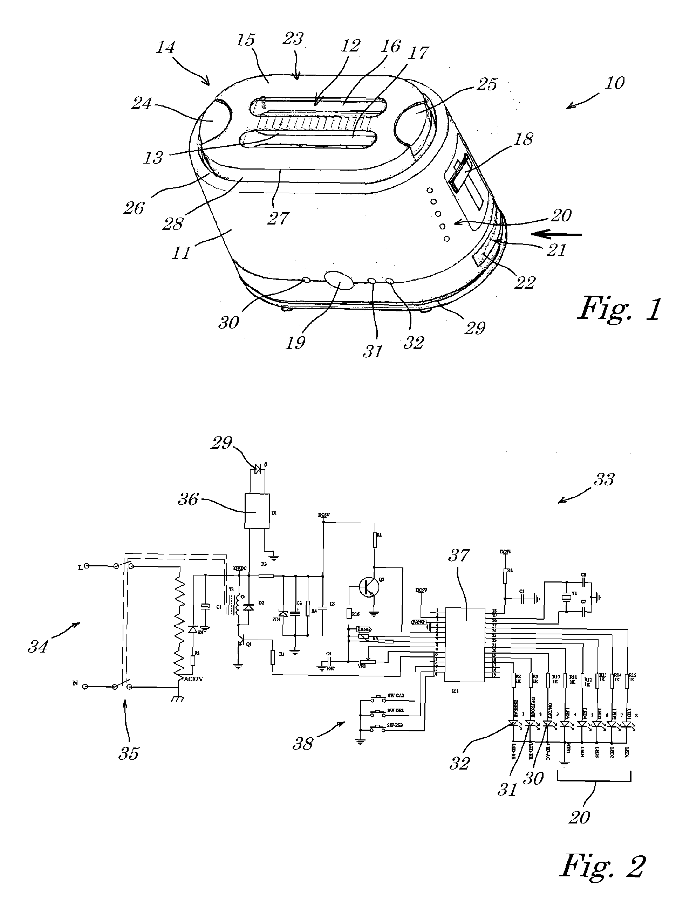

In Fig. 1 ist ein insgesamt mit der Bezugsziffer 10 bezeichnetes erfindungsgemäßes Haushaltsgerät dargestellt, das hier als Toaster ausgebildet ist. Der Toaster 10 weist ein Gehäuse 11 aufweist, welches einen Röstraum 12 umgibt, in welchem in der Zeichnung nur schematisch dargestellte Heizmittel 13 zum Erhitzen von Brotscheiben angeordnet sind. Die Oberseite 14 des Gehäuses 11 des erfindungsgemäßen Toasters ist als vertikal bewegliche horizontale Auflagefläche 15 ausgebildet, in der im dargestellten Beispiel zwei längliche Öffnungen 16, 17 zum Einbringen der (nicht dargestellten) Brotscheiben in den Röstraum 12 ausgespart sind. Der Toaster 10 weist in an sich bekannter Weise einen seitlich am Gehäuse angebrachten, vertikal verschiebbaren Hebel 18 auf, mit welchem die auf einem (in Figur 1 nicht erkennbaren) unterhalb der Öffnungen 16, 17 angeordneten Schlitten aufliegenden Brotscheiben in den Röstraum 12 hineingefahren werden können. Mit Betätigung des Hebels 18 außerdem werden die elektrischen Heizmittel 13 mit Strom beschickt und der Röstvorgang beginnt. Die Dauer des Röstvorgangs kann über einen an der Gehäuseaußenseite vorgesehenen Drehschalter 19 eingestellt werden. Zur Anzeige der Restdauer des Röstvorgangs sind an dem Gehäuse 11 eine Reihe von fünf Leuchtdioden 20 vorgesehen, die von einer, in Figur 1 nicht sichtbaren, aber in Figur 2 schematisch dargestellten elektronischen Schaltung so gesteuert werden, dass die Anzahl der leuchtenden Dioden 20 proportional zur Restdauer des Röstvorgangs ist. Beim Leuchten der letzten Leuchtdiode 20 weiß der Benutzer also, dass es Zeit ist, sich zum Toaster zu begeben, weil der Röstvorgang in Kürze beendet sein wird. An der Stirnseite des Gehäuses 11 weist der Toaster 10 außerdem eine herausnehmbare Sammelschale 21 für den aus dem Röstraum 12 nach unten fallenden Brotkrümel auf. Die Sammelschale 21 für Brotkrümel ist in Fig. 1 in der in das Gehäuse 11 hineingeschobenen Stellung dargestellt. Die Schale 21 weist eine auch als Haltegriff dienende Betätigungsfläche 22 auf, die in dieser Stellung bündig mit der Oberfläche des Gehäuses 11 abschließt. In der Darstellung der Fig. 1 ist die Auflage 15 zum in der nach oben herausgefahrenen zweiten Position dargestellt, welche die zum Erwärmen von auf der Auflage liegenden Brötchen und ähnlichem bevorzugte Position ist. Die Oberseite 23 der Auflage 15 bildet gleichzeitig die Betätigungsfläche, über die der Benutzer die Auflage 15 von der ersten in die zweite Position überführen kann und umgekehrt. Die Auflage 15 weist dazu einen Kunststoff überzogenen seitlichen Betätigungsbereich 24 auf. Der Betätigungsbereich 24 besteht vorzugsweise aus einem wärmebeständigen Kunststoff mit geringer Wärmeleitfähigkeit, so dass auch bei vorheriger Benutzung des Toasters keine Gefahr von Verbrennungen bei Betätigung der Auflage 15 besteht. Der an der gegenüberliegenden Stirnseite der Auflagefläche 15 erkennbare Bereich 25 ist lediglich aus optischen Gründen entsprechend dem Bereich 22 ausgestaltet und für die Betätigung der Auflagefläche funktional nicht erforderlich. Die im in Fig. 1 dargestellten Beispiel deutlich über die die Oberkante 26 des Gehäuses 11 hinausragende Auflagefläche 15 weist an ihrem Außenumfang 27 eine nach unten weisende Schürze 28 auf, welche eine seitliches Entweichen der im Betrieb nach oben steigenden Heißluft verhindert. Die Heißluft kann daher nur über die Öffnungen 16 und 17 entwichen, so dass eine intensive Erwärmung der auf der Oberseite 23 der Auflage 15 angeordneten Backwaren gewährleistet ist.

Schließlich ist in Figur 1 ein im unteren Bereich des Toasters 10 in eine Vertiefung des Gehäuses 11 eingelassenes Elektrolumineszenzband 29 erkennbar, das den Außenumgang des Gehäuses 11 im wesentlichen vollständig umgibt und so als von allen Seiten des Toasters 10 gut sichtbarer Indikator für den Betrieb der Heizmittel dient. Über dem Elektrolumineszenzband 29 sind neben dem Drehschalter 19 weitere LEDs 30,31,32 dargestellt. Die LED 30 dient beispielsweise als zusätzliche Betriebsanzeige des Toasters, während die LEDs 31, 32 einstellbare Zusatzfunktionen, wie beispielsweise eine Auftaufunktion oder eine Warmhaltefunktion des Toasters signalisieren.

Die Schalter und Leuchtanzeigeeinrichtungen des Toasters 10 sind elektrisch mit einer im Gehäuse 11 des Toasters angeordneten Steuerschaltung 33 verbunden, die in Figur 2 schematisch dargestellt ist. Die Schaltung 33 weist Anschlüsse 34 zur Stromversorgung des Toasters 10 auf, die beispielsweise als Netzstecker ausgebildet sein können. Wenn der Toaster über den Netzstecker 34 am Hausnetz angeschlossen ist, kann, beispielsweise durch Betätigen des Hebels 18 des in Figur 1 dargestellten Toasters ein Hauptschalter 35 geschlossen und die Schaltung 33 so mit Strom versorgt werden. Die Schaltung 33 weist einen Konverter 36 auf, der den über das Netzteil gelieferten Wechselstrom des Hausnetzes in einen hinsichtlich Amplitude und Frequenz für den Betrieb des Elektrolumineszenzbandes 29 geeigneten Wechsel- oder Gleichstrom umwandelt. In der Schaltung 33 erkennt man auch einen Mikrokontroller 37, der über verschiedene Druckschalter 38 einstellbar ist und der die unterschiedlichen Betriebsmodi des Toasters 10 sowie, abhängig vom jeweiligen Betriebsmodus und der Restlaufzeit, die Aktivierung der entsprechenden Leuchtdiodengruppe 20, bzw. der Leuchtdioden 30, 31 und 32 steuert.

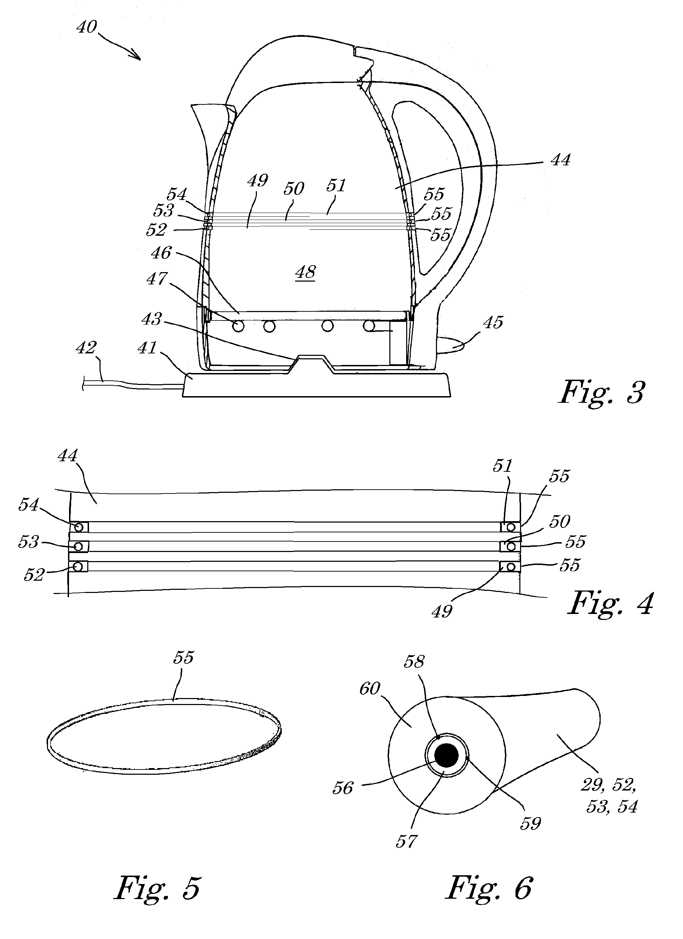

In Figur 3 ist ein insgesamt mit der Bezugsziffer 40 bezeichneter Wasserkocher dargestellt, der im vorliegenden Beispiel als sogenannter schnurloser Wasserkocher ausgebildet ist. Der Wasserkocher 40 weist einen Sockel 41 auf, der über ein nur schematisch dargestelltes Kabel 42 mit dem Hausstromnetz verbunden ist. Über eine lösbare elektrische Steckverbindung 43 ist ein abnehmbar auf dem Sockel 41 angeordneter Wasserbehälter 44 elektrisch mit dem Sockel verbunden. Über die elektrische Steckverbindung können nach Betätigen des Hauptschalters 45 die unter dem Boden 46 des Wasserkochers angeordneten Heizmittel 47 aktiviert und das im Innenraum 48 des Wasserkochers befindliche Wasser erhitzt werden. Im dargestellten Beispiel sind im Außenumfang des abnehmbaren Behälters 44 drei umlaufende Nuten 49, 50 und 51 ausgespart, in welche verschiedenfarbige Elektrolumineszenzbänder 52, 53 und 54 eingelegt sind, welche den Außenumfang des Wasserbehälters 44 im Wesentlich vollständig umgeben.

Der entsprechende Abschnitt des Behälters 44, welcher die Elektrolumineszenzbänder enthält, ist in Figur 4 in einer vergrößerten Darstellung detaillierter wiedergegeben. Die Elektrolumineszenzbänder 52, 53 und 54 können über eine nicht dargestellte Steuerschaltung, welche einen mit dem Innenraum des Behälters 44 in Kontakt stehenden Temperatursensor umfasst, so gesteuert werden, dass je nach Temperatur des im Behälter 44 befindlichen Wassers jeweils eines der Elektrolumineszenzbänder 52, 53 bzw. 54 aktiviert wird. Beispielsweise kann in einem Temperaturbereich bis zu 35 °C ein blau leuchtendes Elektrolumineszenzband 52 aktiviert werden, während in einem Temperaturbereich zwischen 35 und etwa 90 °C ein orange leuchtendes Elektrolumineszenzband 53 aktiviert wird. Bei Temperatur von mehr als 90 °C das rot leuchtende Elektrolumineszenzband 54 ausgelöst wird. Der Benutzer kann daher aus allen Richtungen erkennen, wie weit das Aufkochen des Wassers fortgeschritten ist. Abweichend von diesem konkreten Beispiel können selbstverständlich mehr oder weniger als drei unterschiedlich farbige Elektrolumineszenzbänder vorgesehen sein. Es können auch mehrere einfarbige Elektrolumineszenzbänder vorgesehen sein, wobei man beispielsweise die Temperatur des Wassers oder andere Betriebszustände durch die Anzahl der jeweils aktivierten Elektrolumineszenzbänder repräsentieren kann.

Da Elektrolumineszenzbänder üblicherweise feuchtigkeitsempfindlich sind, wird man insbesondere bei Anwendungen wie dem in den Figuren 3 und 4 dargestellten Wasserkocher vorteilhaft transparente oder semitransparente Schutzringe oder - blenden vorsehen, durch welche die Montagenuten nach dem Einbau der Elektrolumineszenzbänder abgedeckt werden können. Ein entsprechender, beispielsweise zur Abdeckung der Nuten 49, 50 und 51 des Wasserkochers 40 der Figuren 3 und 4 geeigneter Schutzring 55 ist in Figur 5 dargestellt. Vorteilhaft ist der Schutzring so dimensioniert, dass er im Wesentlichen bündig mit der Außenfläche des Haushaltsgeräts, also hier des Wasserbehälters 44 abschließt.

In Figur 6 ist schließlich der schematische Aufbau einer bevorzugten Ausführungsform des Elektrolumineszenzbandes 29, 52, 53 bzw. 54 im Schnitt dargestellt. Das Elektrolumineszenzband 29, 52, 53 bzw. 54 weist einen Metallkern 56 auf, der von einer lumineszierenden Schicht 57 umgeben ist. Die Schicht 57 kann beispielsweise aus einem Kunststoff mit darin verteilten Leuchtpigmenten bestehen, die durch ein elektrisches Feld zu Lumineszenzstrahlung, beispielsweise zur Fluoreszenzstrahlung, angeregt werden können. Die Schicht 57 ist im dargestellten Beispiel von einem oder mehreren spiralförmig um den Zylindermantel der Schicht 57 gewickelten Drähte 58, 59 umgeben. Der Metallkern 56 bildet gewissermaßen die innere Elektrode eines Zylinderkondensators, während die Drähte 58, 59 die äußere Elektrode bilden, wobei die Lumineszenzschicht 57 als Dielektrikum des Kondensators wirkt. Zwischen dem Metallkern 56 und den Drähten 58, 59 wird mittels der von dem Konverter 36 (vgl. Fig. 2) gelieferten Wechselspannung ein Wechselfeld erzeugt, das die Leuchtpigmente in der Schicht 57 zur Lumineszenz anregt. Der zylindersymmetrischen Aufbaus des Elektrolumineszenzbandes gewährleistet dabei eine gleichmäßige Abstrahlung der erzeugten Lumineszenzstrahlung in radialer Richtung. Das Elektrolumineszenzband weist schließlich noch äußeren einem Schutzmantel 60 auf, der vorzugsweise aus einem klaren oder eingefärbten Kunststoffmaterial besteht. Abhängig von der Wahl der Materialien kann die Flexibilität des Elektrolumineszenzbandes in einem weiten Bereich variiert werden.

## Patentansprüche

1. Elektrisches Haushaltsgerät mit Energieversorgungsmitteln und wenigstens einer elektrisch betriebenen Leuchtanzeigeeinrichtung
**dadurch gekennzeichnet, dass**
die Leuchtanzeigeeinrichtung als Elektrolumineszenzband (29;52,53,54) ausgebildet ist.

2. Elektrisches Haushaltsgerät gemäß Anspruch 1, **dadurch gekennzeichnet, dass** das Elektrolumineszenzband (29;52,53,54) als flexibles Band ausgebildet ist.

3. Elektrisches Haushaltsgerät gemäß Anspruch 2, **dadurch gekennzeichnet, dass** das Elektrolumineszenzband (29;52,53,54) ein zylindrische Innenelektrode (56), eine die Innenelektrode umgebende Lumineszenzschicht (57) und eine Außenelektrode (58,59) umfasst.

4. Elektrisches Haushaltsgerät gemäß einem der Ansprüche 2 oder 3, **dadurch gekennzeichnet, dass** das Elektrolumineszenzband (29;52,53,54) an die Außenkontur des Haushaltsgeräts (10;40) angepasst ist.

5. Elektrisches Haushaltsgerät gemäß Anspruch 4, **dadurch gekennzeichnet, dass** das Elektrolumineszenzband (29;52,53,54) in eine in der Außenfläche (11;44) des Haushaltsgeräts (10;40) ausgesparte Nut (49,50,51) eingepasst ist.

6. Elektrisches Haushaltsgerät gemäß Anspruch 5, **dadurch gekennzeichnet, dass** die Nut (49,50,51) von einer transparenten Blende (55) bedeckt ist.

7. Elektrisches Haushaltsgerät gemäß einem der Ansprüche 4 bis 6, **dadurch gekennzeichnet, dass** das Elektrolumineszenzband (29;52,53,54) den Außenumfang des Haushaltsgeräts (10;40) im wesentlichen vollständig umgibt.

8. Elektrisches Haushaltsgerät gemäß einem der Ansprüche 1 bis 7, **dadurch gekennzeichnet, dass** das Elektrolumineszenzband (29;52,53,54) als Betriebsanzeige ausgebildet ist.

9. Elektrisches Haushaltsgerät gemäß einem der Ansprüche 1 bis 8, **dadurch gekennzeichnet, dass** die Energieversorgungsmittel (34;42) des Haushaltsgeräts (10;40) einen Konverter (36) umfassen, über den das Elektrolumineszenzband (29;52,53,54) mit Strom versorgt wird.

10. Elektrisches Haushaltsgerät gemäß einem der Ansprüche 1 bis 9, **dadurch gekennzeichnet, dass** mehrere Elektrolumineszenzbänder (52,53,54) vorgesehen sind.

11. Elektrisches Haushaltsgerät gemäß Anspruch 10, **dadurch gekennzeichnet, dass** die Elektrolumineszenzbänder (52,53,54) verschiedenfarbig ausgebildet sind.

12. Elektrisches Haushaltsgerät gemäß Anspruch 11, **dadurch gekennzeichnet, dass** die verschiedenfarbigen Elektrolumineszenzbänder (52,53,54) unterschiedliche Betriebszustände des Haushaltsgeräts (40) signalisieren.

13. Elektrisches Haushaltsgerät gemäß einem der Ansprüche 9 bis 12, **dadurch gekennzeichnet, dass** eine Steuerungsschaltung (33) zum Ein- und Ausschalten des Elektrolumineszenzbandes (29) oder der Elektrolumineszenzbänder (52,53,54) vorgesehen ist.
